# EUROPÄISCHE PATENTSCHRIFT

(11) **EP 3 080 571 B1**
(45) Veröffentlichungstag und Bekanntmachung des Hinweises auf die Patenterteilung: **14.02.2018**
(21) Anmeldenummer: 14798860.4
(22) Anmeldetag: 14.11.2014
(51) Int. Cl.: G01L 9/00

(54) **DRUCKSENSOR**
PRESSURE SENSOR
CAPTEUR DE PRESSION

(30) Priorität: 11.12.2013 DE 102013113843
(43) Veröffentlichungstag der Anmeldung: 19.10.2016
(73) Patentinhaber: Endress+Hauser GmbH+Co. KG, 79689 Maulburg (DE)
(72) Erfinder: ROSSBERG, Andreas, 79713 Bad Säckingen (DE); TEXTOR, Olaf, 79540 Lörrach (DE); WOSNITZA, Elmar, 79112 Freiburg (DE)
(74) Vertreter: Andres, Angelika Maria
(86) Internationale Anmeldenummer: PCT/EP2014/074581
(87) Internationale Veröffentlichungsnummer: WO 2015/086254

(56) Entgegenhaltungen:
- DE-A1-102007 012 060
- DE-A1-102008 042 447
- US-A- 5 585 311
- US-A1- 2012 024 075

## Beschreibung

Die vorliegende Erfindung betrifft einen Drucksensor, insbesondere einen Mehrbereichsdrucksensor. Kapazitive Drucksensoren umfassen gewöhnlich eine Messmembran und eine Gegenkörper, wobei die Messmembran entlang eines umlaufenden Randes druckdicht mit einem Gegenkörper verbunden ist, wobei zwischen dem Gegenkörper und der Messmembran eine Messkammer gebildet ist, in welcher ein Referenzdruck anliegt, wobei eine von der Messkammer abgewandte Außenseite der Messmembran mit einem zu messenden Druck beaufschlagbar ist, wobei die Messmembran druckabhängig verformbar ist, wobei der Drucksensor einen kapazitiven Wandler mit mindestens einer Gegenkörperelektrode und mindestens einer Membranelektrode aufweist, wobei die Kapazität zwischen der Gegenkörperelektrode und der Membranelektrode von der druckabhängigen Verformung der Messmembran abhängt, wobei ein zentraler Flächenabschnitt der Messmembran im Falle einer Überlast an dem Gegenkörper mit einer Anlagefläche anliegt, deren Größe druckabhängig ist.

Durch das Anliegen am Gegenkörper ist die Messmembran über einen weiten Überlastdruckbereich abgestützt, wodurch das Erreichen der Berstspannung in der Messmembran verhindert wird. Damit ist der Sensor zwar einerseits vor Zerstörung geschützt, andererseits ist eine kapazitive Druckmessung in dem Bereich hoher Drücke nicht mehr möglich.

Um dies dennoch zu ermöglichen, besteht die Möglichkeit den Abstand zwischen Messmembran und Gegenkörper zu vergrößern, wodurch die Messmembran erst bei höheren Drücken auf dem Gegenkörper aufsetzt. Dies ist jedoch aus zwei Gründen nachteilig. Erstens nimmt mit größerem Abstand zwischen den Elektroden die Dynamik dC/dp ab, und zweitens wird das Erreichen der Berstspannung und damit die Zerstörung es Drucksensors wahrscheinlicher. Andererseits kann man steifere Messmembranen verwenden, was wiederum zu Einbußen bei der Dynamik dC/dp führt. Es sind aber Messaufgaben bekannt, bei denen während eines Vakuumprozesses niedrige Drücke mit hoher Genauigkeit zu messen sind, wobei in anschließenden Sattdampfsterilisationen der Prozessanlage, der vorherrschende Dampfdruck zu erfassen ist. Letzteres darf ggf. mit geringerer Messgenauigkeit erfolgen. Verschiedene Drucksensoren sind aus den Dokumenten DE 10 2008 042 447, US 2012 0024075, US 5585311, DE 10 2007 012 060 und DE 10 2007 027 274 bekannt.

Es ist daher die Aufgabe der vorliegenden Erfindung, hier Abhilfe zu schaffen. Die Aufgabe wird erfindungsgemäß gelöst durch den Drucksensor gemäß dem unabhängigen Patentanspruch 1.
Der erfindungsgemäße Drucksensor umfasst eine Messmembran und einen Gegenkörper, wobei die Messmembran entlang eines umlaufenden Randes druckdicht mit dem Gegenkörper verbunden ist, wobei zwischen dem Gegenkörper und der Messmembran eine Messkammer gebildet ist, in welcher ein Referenzdruck anliegt, wobei eine von der Messkammer abgewandte Außenseite der Messmembran mit einem zu messenden Druck beaufschlagbar ist, wobei die Messmembran druckabhängig verformbar ist, wobei der Drucksensor einen kapazitiven Wandler mit mindestens einer Gegenkörperelektrode und mindestens einer Membranelektrode aufweist, wobei die Kapazität zwischen der Gegenkörperelektrode und der Membranelektrode von der druckabhängigen Verformung der Messmembran abhängt, wobei zumindest ein zentraler Flächenabschnitt der Membranelektrode oberhalb eines Druckgrenzwerts für den Druck an dem Gegenkörper mit einer Anlagefläche anliegt, deren Größe druckabhängig ist, wobei der Drucksensor weiterhin einen resistiven Wandler aufweist zum Wandeln einer druckabhängigen Verformung der Messmembran bei Drücken oberhalb des Druckgrenzwerts in ein elektrisches Signal anhand eines elektrischen Widerstands der von der Anlagefläche der Messmembran am Gegenkörper abhängt. Der Referenzdruck kann bei Absolutdrucksensoren ein Vakuumdruck von beispielsweise weniger als 10⁻³ mbar bzw. bei einem Relativdrucksensor der umgebende Atmosphärendruck sein.

In einer Weiterbildung der Erfindung weist der resistive Wandler mindestens zwei Elektroden auf, wobei der elektrische Widerstand, anhand dessen der resistive Wandler das elektrische Signal bereitstellt, zwischen den mindestens zwei Elektroden zu bestimmen ist.

In einer Weiterbildung der Erfindung weist der resistive Wandler mindestens eine Widerstandsschicht auf, mit welcher mindestens eine der Elektroden des resistiven Wandlers beschichtet ist, wobei die Widerstandsschicht einer ersten Elektrode des resistiven Wandlers bei Drücken oberhalb des Druckgrenzwerts eine Kontaktfläche zu einer zweiten Elektrode bzw. zu einer Widerstandsschicht der zweiten Elektrode aufweist, welche von der Anlagefläche der Messmembran am Gegenkörper abhängt. In einer Weiterbildung der Erfindung ist die Kontaktfläche im wesentlichen gleich der Anlagefläche.

In einer Weiterbildung der Erfindung bildet die Membranelektrode des kapazitiven Wandlers eine erste der Elektroden des resistiven Wandlers, und wobei die Gegenkörperelektrode des kapazitiven Wandlers eine zweite Elektrode des resistiven Wandlers bildet.

In einer Weiterbildung der Erfindung umfasst der kapazitive Wandler mindestens zwei Gegenkörperelektroden, wobei eine erste der Gegenkörperelektroden in einem ersten radialen Bereich angeordnet ist und eine zweite der gegen Gegenkörperelektroden in einem zweiten radialen Bereich angeordnet ist, wobei der erste radiale Bereich kleinere Radien umfasst als der zweite radiale Bereich, wobei für einen ersten Druckbereich oberhalb des Druckgrenzwerts die Anlagefläche nur in dem ersten radialen Bereich ausgebildet ist, wobei der resistive Wandler dazu eingerichtet ist, ein Signal bereitzustellen, welches vom Widerstand zwischen der ersten Gegenkörperelektrode und der Membranelektrode abhängt.

Die beiden Gegenkörperelektroden können gemäß einer Ausgestaltung der Erfindung als Differentialkondensator beschaltet sein, wobei die Kapazitäten gegenüber der Membranelektrode in der Ruhelage der Messmembran gleich sind. Ein häufig verwendete Übertragungsfunktion für diese Differentialkondensatoren hat die Form p=p((cp-cr)/cr).

In einer Weiterbildung der Erfindung umfasst der Drucksensor weiterhin eine Auswerteschaltung, welche dazu eingerichtet ist, bei Drücken unterhalb des Druckgrenzwerts einen kapazitätsabhängigen Druckmesswert bereitzustellen, wobei in einem Wertebereich oberhalb des Druckgrenzwerts das Signal des resistiven Wandlers in die Bestimmung des Druckmesswerts eingeht.

In einer Weiterbildung der Erfindung ist die Auswerteschaltung dazu eingerichtet, zumindest für einen Teilbereich des ersten Druckbereichs, welcher unmittelbar an den Druckgrenzwert anschließt, einen Druckmesswert in Abhängigkeit von einer Kapazität zwischen der Membranelektrode und der zweiten Gegenkörperelektrode zu bestimmen.

In einer Weiterbildung der Erfindung ist die Auswerteschaltung dazu eingerichtet, einen Druckmesswert in Abhängigkeit des Signals des resistiven Wandlers zu bestimmen, wenn der Widerstand einen Widerstandsgrenzwert unterschreitet.

In einer Weiterbildung der Erfindung wird auch in einem zweiten Druckbereich, der an den ersten Druckbereich zu geringeren Drücken hin anschließt, ein Druckmesswert der Kapazität zwischen der Membranelektrode und der zweiten Gegenkörperelektrode bestimmt, wobei der zweite Druckbereich eine Untergrenze aufweist, die beispielsweise nicht weniger als 75%, vorzugsweise nicht weniger als 90% des Druckgrenzwerts beträgt.

Die Bestimmung des Drucks im zweiten Bereich unterhalb des Druckgrenzwerts ausschließlich anhand der Kapazität der äußeren Gegenelektrode ermöglicht eine stetige Druckmessung in einem Bereich, in dem die Kapazität der inneren Gegenkörperelektrode mit steigendem Druck divergiert, so dass eine zuverlässige Wandlung in ein kapazitätsabhängiges Signal erschwert ist. Gleichermaßen ist bei Drücken unmittelbar oberhalb des Druckgrenzwerts die Kontaktfläche noch so gering, dass das Signal des resistiven Wandlers ebenfalls starken Schwankungen unterworfen ist. Hier bietet die Kapazität der äußeren Elektrode einen Ansatz zur Bereitstellung eines stetigen Signals mit dem der kritische Übergangsbereich um den Druckgrenzwert gut abgedeckt werden kann, wenngleich die Dynamik dcr/dp der Kapazität der äußeren Gegenkörperelektrode naturgemäß begrenzt ist.

In einer Weiterbildung der Erfindung umfasst die Widerstandsschicht SiC oder TiO₂.

In einer Weiterbildung der Erfindung weisen die Messmembran und der Gegenkörper einen keramischen Werkstoff auf, insbesondere Korund, wobei die Elektroden des kapazitiven Wandlers Metall aufweisen.

In einer Weiterbildung der Erfindung weist die Messmembran einen Halbleiter auf, insbesondere Silizium.

Die Erfindung wird nun anhand eines in den Zeichnungen dargestellten Ausführungsbeispiels erläutert. Es zeigt:
- Fig. 1:: einen schematischen Längsschnitt durch ein Ausführungsbeispiel eines erfindungsgemäßen Drucksensors;
- Fig. 2:: ein Diagramm der Kapazitäten eines Ausführungsbeispiels eines kapazitiven Drucksensors mit einem Differentialkondensator in einem rein kapazitiv auszuwertenden Druckbereich;
- Fig. 3:: ein Diagramm einer Übertragungsfunktion, welche anhand der Kapazitäten des Differentialkondensators aus Fig. 2 zu bestimmen ist; und
- Fig. 4:: eine Darstellung der Kapazitäten des Differentialkondensators und der Kontaktfläche zwischen der inneren Elektrode des Differentialkondensators und der Membranelektrode in einem Druckbereich um den Druckgrenzwert

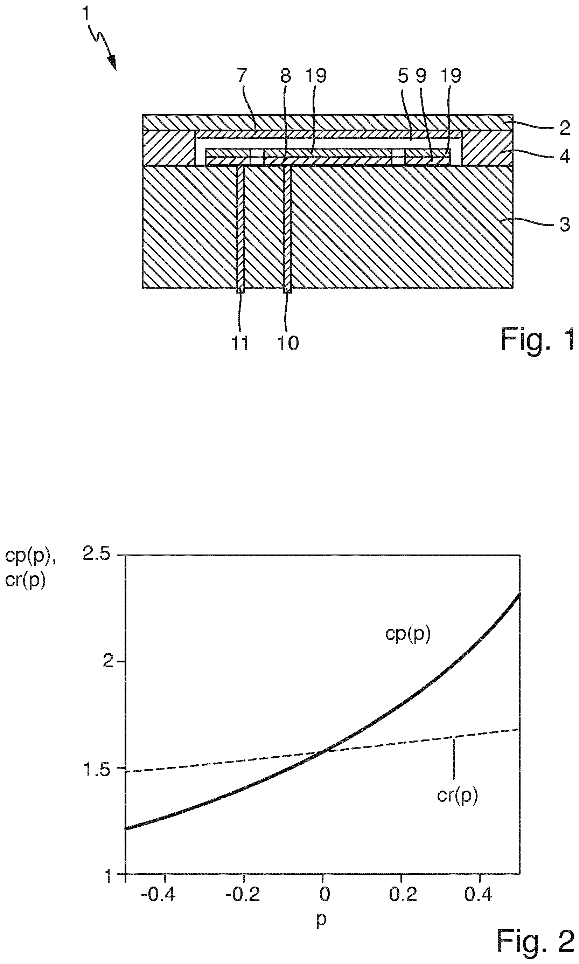

Der in Fig. 1 dargestellte Drucksensor 1 umfasst eine kreisscheibenförmige, keramische Messmembran 2, die mit einem erheblich steiferen kreisplattenförmigen, keramischen Gegenkörper 3 entlang einer umlaufenden Fügestelle 4 unter Bildung einer Messkammer 5 zwischen dem Gegenkörper 3 und der Messmembran 2 druckdicht gefügt ist. Die Messmembran und der Gegenkörper können insbesondere Korund aufweisen. Die Fügestelle kann insbesondere ein Aktivhartlot, beispielsweise ein Zr-Ni-Ti-Aktivhartlot oder Glas, aufweisen.

Die Messmembran weist auf ihrer gegenkörperseitigen Oberfläche eine vollflächige Membranelektrode 7 auf, die beispielsweise eine Metallschicht, insbesondere eine Ta-Schicht umfasst, wobei die Elektrode einen Durchmesser von 2 R aufweist, wobei R der Radius des auslenkbaren Bereichs der Messmembran ist, der dem Innenradius der Fügestelle entspricht. Auf der messmembranseitigen Oberfläche des Gegenkörpers ist eine zentrale, kreisflächenförmige Messelektrode 8 angeordnet, die von einer bezüglich der Membranelektrode 7 in der Ruhelage der Messmembran 2 im wesentlichen kapazitätsgleichen kreisringförmigen Referenzelektrode 9 umgeben ist. Der Abstand der Referenzelektrode 9 zur Messelektrode 8 und zur Fügestelle 4 beträgt jeweils etwa 0,1 R. Die Referenzelektrode 9 und die Messelektrode 8 sind über metallische Durchführungen 10, 11 durch den Grundkörper elektrisch kontaktiert. Die Membranelektrode 7 kann beispielsweise über die Fügestelle 4 auf Schaltungsmasse gelegt sein.

Die Messelektrode 8 ist mit einer elektrischen Widerstandsschicht 18 bedeckt, die beispielsweise SiC in einer Stärke von beispielsweise 10-100 µm Der spezifische Widerstand der Schicht beträgt beispielsweise etwa 1 kΩ·m bis 10 kΩ·m.

In einer anderen Ausgestaltung der Erfindung weist die Widerstandsschicht TiO₂ tandioxyd oder dotiertes TiO₂ auf, wobei mit dem TiO₂ angrenzend an die Fügestelle ein Lötstopp präpariert ist, welcher beim Fügen der Messmembran mit dem Grundkörper ein Einlaufen des Aktivhartlots in die Messkammer 5 verhindert. Da ein galvanischer Kontakt zwischen der Fügestelle und dem Lötstopp entsteht, ist der Lötstopp von der äußeren Gegenkörperelektrode zu isolieren. Dazu ist die Widerstandsschicht am einfachsten auf der Membranelektrode aufzutragen. Wenn eine TiO₂-Widerstandsschicht mit Lötstoppfunktion auf dem Gegenkörper präpariert werden soll, ist sie entsprechend zu strukturieren, so dass die Gegenkörperelektroden und die Fügestelle gegeneinander isoliert sind.

Wenn die Messmembran 2 oberhalb eines Druckgrenzwerts in einem solchen Maße ausgelenkt ist, dass sich ihr Zentrum an dem Gegenkörper 3 abstützt, kommt es zu einem elektrischen Kontakt zwischen der Membranelektrode 7 und der Messelektrode 8, bzw. bei noch höheren Drücken und einem hinreichend geringen Gleichgewichtsabstand zwischen Messmembran und Gegenkörper ggf. auch zwischen der Membranelektrode 7 und der Referenzelektrode 9. Aufgrund der Widerstandsschichten 18, 19, auf den Elektroden kommt es jedoch nicht zu einem Kurzschluss, sondern zu einem definierten Widerstand, dessen Wert mit zunehmender Kontaktfläche abnimmt. Der Widerstand ist hierbei beispielsweise zwischen Schaltungsmasse, auf welcher die Membranelektrode 7 liegt, und den Durchführungen 10 bzw. 11 der Messelektrode 8 bzw Referenzelektrode 9 zu erfassen. Im dargestellten Ausführungsbeispiel liegt die Membranelektrode 7 über die über elektrisch leitende Fügestelle 4, welche ein Aktivhartlot aufweist, auf Schaltungsmasse. Sollt die Messmembran mittels eines Glaslots mit dem Gegenkörper gefügt sein, so kann die Membranelektrode beispielsweise mit einer (hier nicht gezeigten) elektrischen Durchführung durch den Gegenkörper und durch die Fügestelle kontaktiert sein.

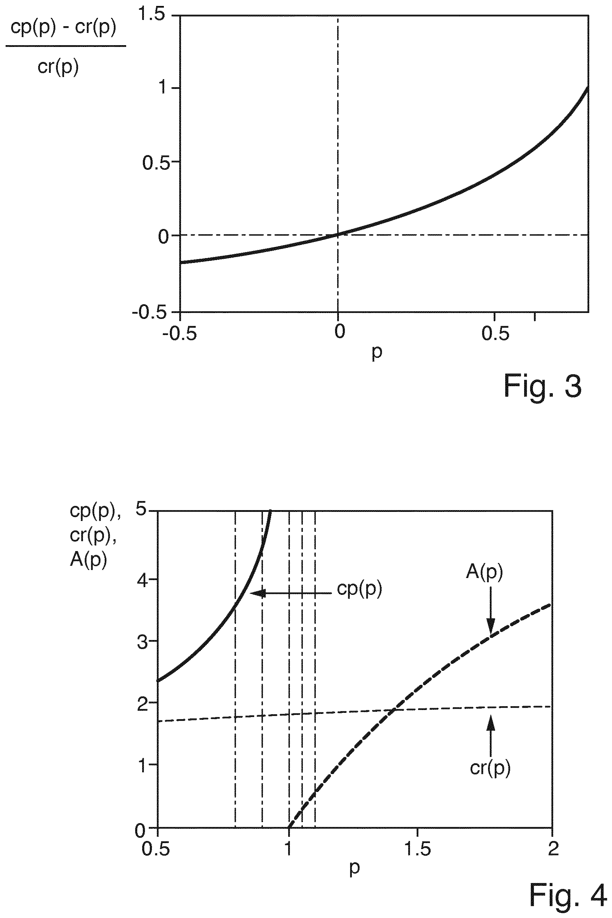

Wie in Fig. 2 dargestellt, haben die Kapazitäten des zuvor beschriebenen Differentialkondensators im wesentlichen den folgenden druckabhängigen Verlauf. In der Ruhelage der Messmembran, die bei einem Druck p=0 auftritt ist die Messelektrodenkapazität gleich der Referenzelektrodenkapazität. Mit zunehmendem Druck steigt die mit einer kontinuierlichen Linie dargestellte Messelektrodenkapazität cp stärker an als die mit einer punktierten Linie dargestellte Referenzelektrodenkapazität cr. Fig. 3 zeigt nun eine typische Übertragungsfunktion (cp-cr)/cr auf Basis der in Fig. 2 dargestellten Kapazitäten, wobei der kapazitive Wandler ein Signal ausgibt, welches eine Funktion von der Übertragungsfunktion ist. Der übliche Anwendungsbereich einer solchen Übertragungsfunktion erstreckt sich beispielsweise über eine Druckbereich von p=-0,3 bis p= 0,3 bzw. p= -0,5 bis p= 0,5, wobei p=1 der Druck ist, bei dem das Zentrum der Messmembran am Gegenkörper zur Anlage kommt. Wie in Fig.2 ersichtlich, ist die Messelektrodenkapazität cp für p > 0,5 stark ansteigend, was zur Folge hat, dass beispielweise ein relativ großer Wertebereich eines AD-Wandlers für einen kleinen Druckbereich zu verwenden ist, der zudem häufig am Rande des hauptsächlich interessierenden Messbereichs liegt. Wenn der Druck noch weiter gegen p=1 steigt, geht die Messelektrodenkapazität theoretisch gegen unendlich, weshalb sie bzw. die daraus abgeleitete Übertragungsfunktion zur Bestimmung eines Druckmesswerts dann nicht mehr geeignet ist. In Fig. 4 sind zur Erläuterung dieser Problematik nochmals die Messelektrodenkapazität cp (mit durchgezogener Linie) und die Referenzelektrodenkapazität cr (mit punktierter Linie) für einen Druckbereich zwischen p=0,5 und p=2 dargestellt. Zudem ist die Kontaktfläche zwischen der Messelektrode und der Membranelektrode (mit gestrichelter Linie) dargestellt. Für p > 0,8 bzw. 0,9 steigt die Messelektrodenkapazität so stark an, das eine Auswertung eines entsprechenden Signals nur mit großem Aufwand durchführbar ist. Zudem bricht die Messelektrodenkapazität bei p=1 zusammen, da es zu einem Kontakt zwischen den beteiligten Elektroden kommt. Andererseits ist die vom resistiven Wandler zu erfassende Kontaktfläche bei p=1 noch sehr gering, so dass relative geringe Druckschwankungen zu einem instabilen Widerstandssignal führen können. Daher ist der resistive Wandler, welcher den Widerstand erfasst erst ab beispielsweise p>1,05 bzw. p > 1,1 zuverlässig zur Bestimmung der Kontaktfläche bzw. des Drucks heranzuziehen. Für den Druckbereich Übergangsbereich um p=1, beispielsweise 0,9 <p < 1,05 bzw. 0,8 <p < 1,1 bietet sich eine Druckbestimmung anhand der Referenzelektrodenkapazität an, die in diesem Übergangsbereich zwar nur ein Mindestmaß an Dynamik dc/dp >0 aufweist, aber im Gegensatz zu den zuvor beschriebenen elektrischen Größen einen stabilen und stetigen Verlauf hat, anhand dessen dem eine Druckmessung in dem Übergangsbereich durchgeführt bzw. unterstützt werden kann.

## Patentansprüche

1. Drucksensor (1), umfassend
eine Messmembran (2); und
einen Gegenkörper (3),
wobei die Messmembran (2) entlang eines umlaufenden Randes druckdicht mit dem Gegenkörper (3) verbunden ist,
wobei zwischen dem Gegenkörper(3) und der Messmembran (2) eine Messkammer (5) gebildet ist, in weicher ein Referenzdruck anliegt,
wobei eine von der Messkammer (5) abgewandte Außenseite der Messmembran (2) mit einem zu messenden Druck beaufschlagbar ist,
wobei die Messmembran (2) druckabhängig verformbar ist, wobei der Drucksensor (1) einen kapazitiven Wandler mit mindestens einer Gegenkörperelektrode (8, 9) und mindestens einer Membranelektrode (7) aufweist, wobei die Kapazität zwischen der mindestens einen Gegenkörperelektrode (8, 9) und der Membranelektrode (7) von der druckabhängigen Verformung der Messmembran (2) abhängt, wobei zumindest ein zentraler Flächenabschnitt der Messmembran (2) oberhalb eines Druckgrenzwerts für den Druck an dem Gegenkörper mit einer Anlagefläche (A(p)) anliegt, deren Größe druckabhängig ist,
**dadurch gekennzeichnet, dass**
der Drucksensor weiterhin einen resistiven Wandler aufweist, der dazu ausgebildet ist, eine druckabhängige Verformung der Messmembran bei Drücken in einem Wertebereich oberhalb des Druckgrenzwerts in ein elektrisches Signal zu wandeln anhand eines elektrischen Widerstands, der von der Anlagefläche der Messmembran (2) am Gegenkörper (3) abhängt.

2. Drucksensor nach Anspruch 1 wobei der resistive Wandler mindestens zwei Elektroden (7, 8, 9) aufweist, wobei der elektrische Widerstand, anhand dessen der resistive Wandler das elektrische Signal bereitstellt, zwischen den mindestens zwei Elektroden zu bestimmen ist.

3. Drucksensor nach Anspruch 2, wobei der resistive Wandler mindestens eine Widerstandsschicht (18,19) aufweist, mit welcher mindestens eine der Elektroden (7, 8, 9) des resistiven Wandlers beschichtet ist, wobei die Widerstandsschicht einer ersten Elektrode (7) des resistiven Wandlers bei Drücken oberhalb des Druckgrenzwerts eine Kontaktfläche (A(p)) zu einer zweiten Elektrode (8) bzw. zu einer Widerstandsschicht (18), 19) der zweiten Elektrode (8, 9) aufweist, welche von der Anlagefläche der Messmembran (2) am Gegenkörper (3) abhängt.

4. Drucksensor nach Anspruch 3, wobei die Kontaktfläche (A(p)) im wesentlichen gleich der Anlagefläche ist.

5. Drucksensor nach Anspruch 2 oder einem von Anspruch 2 abhängigen Anspruch, wobei die Membranelektrode (7) des kapazitiven Wandlers eine erste der Elektroden des resistiven Wandlers bildet, und wobei die mindestens eine Gegenkörperelektrode (8, 9) des kapazitiven Wandlers eine zweite Elektrode des resistiven Wandlers bildet.

6. Drucksensor nach einem der vorhergehenden Ansprüche, wobei der kapazitive Wandler mindestens zwei Gegenkörperelektroden (8, 9) umfasst, wobei eine erste der Gegenkörperelektroden (8) in einem ersten radialen Bereich angeordnet ist und eine zweite der gegen Gegenkörperelektroden (9) in einem zweiten radialen Bereich angeordnet ist, wobei der erste radiale Bereich kleinere Radien umfasst als der zweite radiale Bereich, wobei für einen ersten Druckbereich oberhalb des Druckgrenzwerts die Anlagefläche nur in dem ersten radialen Bereich ausgebildet ist, wobei der resistive Wandler dazu eingerichtet ist, ein Signal bereitzustellen, welches vom Widerstand zwischen der ersten Gegenkörperelektrode (8) und der Membranelektrode (7) abhängt.

7. Drucksensor nach einem der vorhergehenden Ansprüche, weiterhin umfassend eine Auswerteschaltung, welche dazu eingerichtet ist bei Drücken unterhalb des Druckgrenzwerts einen kapazitätsabhängigen Druckmesswert bereitzustellen, wobei oberhalb des Druckgrenzwerts das Signal des resistiven Wandlers in die Bestimmung des Druckmesswerts eingeht.

8. Drucksensor nach Anspruch 6 und 7, wobei die Auswerteschaltung dazu eingerichtet ist, zumindest für einen Teilbereich des ersten Druckbereichs, welcher unmittelbar an den Druckgrenzwert anschließt, einen Druckmesswert in Abhängigkeit von einer Kapazität zwischen der Membranelektrode und der zweiten Gegenkörperelektrode zu bestimmen.

9. Drucksensor nach Anspruch 7 oder 8, wobei die Auswerteschaltung dazu eingerichtet ist, einen Druckmesswert in Abhängigkeit des Signals des resistiven Wandlers zu bestimmen, wenn der Widerstand einen Widerstandsgrenzwert unterschreitet.

10. Drucksensor nach Anspruch 3, oder einem von Anspruch 3 abhängigen Anspruch, wobei die Widerstandsschicht SiC oder TiO₂ aufweist.

11. Drucksensor nach einem der vorhergehenden Ansprüche, wobei die Messmembran und der Gegenkörper einen keramischen Werkstoff, insbesondere Korund aufweisen, wobei die Elektroden des kapazitiven Wandlers Metall aufweisen.

12. Drucksensor nach einem der vorhergehenden Ansprüche, wobei die Messmembran einen Halbleiter aufweist, insbesondere Silizium.

## Claims

1. Pressure sensor (1), comprising
a measuring membrane (2); and
a counter-body (3),
wherein the measuring membrane (2) is connected in a pressure-tight manner to the counter-body (3) along a circumferential edge,
wherein a measuring chamber (5), in which a reference pressure is present, is formed between the counter-body (3) and the measuring membrane (2), wherein an exterior side of the measuring membrane (2), which faces away from the measuring chamber (5), can be subject to a pressure to be measured,
wherein the measuring membrane (2) can be deformed depending on the pressure, wherein the pressure sensor (1) has a capacitance converter with at least one counter-body electrode (8, 9) and at least a membrane electrode (7), wherein the capacitance between the at least one counter-body electrode (8, 9) and the membrane electrode (7) depends on the pressure-dependent deformation of the measuring membrane (2), wherein at least one central surface area of the measuring membrane (2) rests on the counter-body with a support surface (A(p)) above a pressure limit value for the pressure, wherein the size of said surface depends on the pressure,
**characterized in that**
the pressure sensor further has a resistive converter which is designed to convert a pressure-dependent deformation of the measuring membrane at pressures in a value range above the pressure limit value to an electrical signal using an electrical resistance, which depends on the support surface of the measuring membrane (2) on the counter-body (3).

2. Pressure sensor as claimed in Claim 1, wherein the resistive converter has at least two electrodes (7, 8, 9), wherein the electrical resistance, on the basis of which the resistive converter provides the electrical signal, is to be determined between the at least two electrodes.

3. Pressure sensor as claimed in Claim 2, wherein the resistive converter has at least one resistive layer (18, 19) with which at least one of the electrodes (7, 8, 9) of the resistive converter is coated, wherein the resistive layer of a first electrode (7) of the resistive converter has a contact surface (A(p)) to a second electrode (8) or to a resistive layer (18, 19) of the second electrode (8, 9) at pressures above the pressure limit value, said contact surface being dependent on the support surface of measuring membrane (2) on the counter-body (3).

4. Pressure sensor as claimed in Claim 3, wherein the contact surface (A(p)) is essentially equal to the support surface.

5. Pressure sensor as claimed in Claim 2 or a claim dependent on Claim 2, wherein the membrane electrode (7) of the capacitive converter forms a first of the electrodes of the resistive converter, and wherein the at least one counter-body electrode (8, 9) of the capacitive converter forms a second electrode of the resistive converter.

6. Pressure sensor as claimed in one of the previous claims, wherein the capacitive converter comprises at least two counter-body electrodes (8, 9), wherein a first of the counter-body electrodes (8) is arranged in a first radial area and a second of the counter-body electrodes (9) is arranged in a second radial area, wherein the first radial area comprises smaller radii than the second radial area, wherein for a first pressure range above the pressure limit value the support surface is only formed in the first radial area, wherein the resistive converter is configured to provide a signal which depends on the resistance between the first counter-body electrode (8) and the membrane electrode (7).

7. Pressure sensor as claimed in one of the previous claims, further comprising an evaluation circuit which is configured to provide a capacitance-dependent pressure measuring value in the event of pressures below the pressure limit value, wherein above the pressure limit value the signal of the resistive converter is taken into consideration in determining the pressure measured value.

8. Pressure sensor as claimed in Claim 6 and 7, wherein the evaluation circuit is configured to determine a pressure measured value depending on a capacitance between the membrane electrode and the second counter-body electrode, at least for a part of the first pressure range which is directly adjacent to the pressure limit value.

9. Pressure sensor as claimed in Claim 6 and 7, wherein the evaluation circuit is configured to determine a pressure measured value depending on the signal of the resistive converter if the resistance drops below a resistance limit value.

10. Pressure sensor as claimed in Claim 3 or a claim dependent on Claim 3, wherein the resistive layer features SiC or TiO₂.

11. Pressure sensor as claimed in one of the previous claims, wherein the measuring membrane and the counter-body feature a ceramic material, particularly corundum, wherein the electrodes of the capacitance converter feature metal.

12. Pressure sensor as claimed in one of the previous claims, wherein the measuring membrane features a semi-conductor, particularly silicon.

## Revendications

1. Capteur de pression (1), comprenant
une membrane de mesure (2) ; et
un contre-corps (3),
pour lequel la membrane de mesure (2) est reliée le long d'un bord périphérique de façon étanche à la pression avec le contre-corps (3),
pour lequel est formée, entre le contre-corps (3) et la membrane de mesure (2), une chambre de mesure (5) dans laquelle est appliquée une pression de référence,
pour lequel un côté extérieur, situé à l'opposé de la chambre de mesure (5), de la membrane de mesure (2) peut être alimenté avec une pression à mesurer,
pour lequel la membrane de mesure (2) est déformable en fonction de la pression, le capteur de pression (1) comportant un transducteur capacitif avec au moins une électrode de contre-corps (8, 9) et une électrode de membrane (7), la capacité entre l'au moins une électrode de contre-corps (8, 9) et l'au moins une électrode de membrane (7) dépendant de la déformation de la membrane de mesure (2) en fonction de la pression, au moins une partie de surface centrale de la membrane de mesure (2) reposant, au-delà d'un seuil de pression, avec une surface d'appui (A(p)) sur le contre-corps, surface dont la taille varie en fonction de la pression,
**caractérisé**
**en ce que** le capteur de pression comprend en outre un transducteur résistif, lequel est conçu de telle sorte à convertir en un signal électrique une déformation fonction de la pression de la membrane de mesure pour des pressions situées dans une gamme de valeurs au-delà du seuil de pression, sur la base d'une résistance électrique qui dépend de la surface d'appui de la membrane de mesure (2) sur le contre-corps (3).

2. Capteur de pression selon la revendication 1, pour lequel le transducteur résistif comporte au moins deux électrodes (7, 8, 9), la résistance électrique, sur la base de laquelle le transducteur résistif met à disposition le signal électrique, devant être déterminée entre les au moins deux électrodes.

3. Capteur de pression selon la revendication 2, pour lequel le transducteur résistif comporte au moins une couche résistive (18, 19) avec laquelle au moins l'une des électrodes (7, 8, 9) du transducteur résistif est revêtue, la couche résistive d'une première électrode (7) du transducteur résistif présentant pour les pressions au-delà du seuil de pression une surface de contact (A(p)) avec une deuxième électrode (8) ou avec une couche résistive (18, 19) de la deuxième électrode (8, 9), laquelle surface de contact dépend de la surface d'appui de la membrane de mesure (2) sur le contre-corps (3).

4. Capteur de pression selon la revendication 3, pour lequel la surface de contact (A(p)) est pour l'essentiel égale à la surface d'appui.

5. Capteur de pression selon la revendication 2 ou une revendication dépendant de la revendication 2, pour lequel l'électrode de membrane (7) du transducteur capacitif forme une première des électrodes du transducteur résistif, et pour lequel l'au moins une électrode de contre-corps (8, 9) du transducteur capacitif forme une deuxième électrode du transducteur résistif.

6. Capteur de pression selon l'une des revendications précédentes, pour lequel le transducteur capacitif comprend au moins deux électrodes de contre-corps (8, 9), une première des électrodes de contre-corps (8) étant disposée dans une première zone radiale, et une deuxième des électrodes de contre-corps (9) étant disposée dans une deuxième zone radiale, la première zone radiale comprenant des rayons plus petits que la deuxième zone radiale, la surface d'appui étant, pour une première gamme de pression au-delà du seuil de pression, uniquement formée dans la première zone radiale, le transducteur résistif étant configuré de telle manière à mettre à disposition un signal qui dépend de la résistance entre la première électrode de contre-corps (8) et l'électrode de membrane (7).

7. Capteur de pression selon l'une des revendications précédentes, comprenant en outre un circuit d'exploitation, lequel est configuré, pour les pressions inférieures au seuil de pression, de manière à mettre à disposition une valeur mesurée de pression dépendant de la capacité, le signal du transducteur résistif étant pris en compte, au-delà du seuil de pression, dans la détermination de la valeur mesurée de pression.

8. Capteur de pression selon la revendication 6 et 7, pour lequel le circuit d'exploitation est configuré de telle manière à déterminer, au moins pour une zone partielle de la première gamme de pression, qui jouxte immédiatement le seuil de pression, une valeur mesurée de pression en fonction d'une capacité entre l'électrode de membrane et la deuxième électrode de contre-corps.

9. Capteur de pression selon la revendication 7 ou 8, pour lequel le circuit d'exploitation est configuré de telle manière à déterminer une valeur mesurée de pression en fonction du signal du transducteur résistif lorsque la résistance passe sous un seuil de résistance.

10. Capteur de pression selon la revendication 3 ou une revendication dépendant de la revendication 3, pour lequel la couche résistive présente du SiC ou du TiO₂.

11. Capteur de pression selon l'une des revendications précédentes, pour lequel la membrane de mesure et le contre-corps présentent un matériau céramique, notamment du corindon, les électrodes du transducteur capacitif présentant du métal.

12. Capteur de pression selon l'une des revendications précédentes, pour lequel la membrane de mesure présente un semi-conducteur, notamment du silicium.
